# EUROPÄISCHE PATENTSCHRIFT

(11) **EP 2 846 005 B1**
(45) Veröffentlichungstag und Bekanntmachung des Hinweises auf die Patenterteilung: **15.03.2017**
(21) Anmeldenummer: 14179664.9
(22) Anmeldetag: 04.08.2014
(51) Int. Cl.: F01D 21/04, F01D 25/24, F01D 17/02, F02C 7/05

(54) **Vorrichtung zur Energieabsorption, Strömungsmaschine und Verfahren zur Energieabsorption**
Device for energy absorption, flow engine and method of absorbing energy
Dispositif d'absorption d'énergie, turbomachine et procédé d'absorption d'énergie

(30) Priorität: 03.09.2013 DE 102013217503
(43) Veröffentlichungstag der Anmeldung: 11.03.2015
(73) Patentinhaber: MTU Aero Engines AG, 80995 München (DE)
(72) Erfinder: Sasse, Stefan, 85238 Petershausen (DE); Schinko, Norbert, 81373 München (DE)

(56) Entgegenhaltungen:
- EP-A1- 1 073 828
- EP-A2- 0 927 815
- EP-A2- 2 495 400
- DE-C1- 4 344 650
- US-A- 4 324 144
- US-A- 5 203 673

## Beschreibung

Die Erfindung betrifft eine Vorrichtung zum Erhalt einer Containment-Fähigkeit nach dem Oberbegriff von Anspruch 1, eine Strömungsmaschine mit einer derartigen Vorrichtung, sowie ein Verfahren zum Erhalt einer Containment-Fähigkeit. Eine gattungsgemäße Vorrichtung ist zum Beispiel aus der Druckschrift DE 43 44 650 C1 bekannt, wenngleich diese nicht explizit auf den Erhalt der Containment-Fähigkeit abstellt.

Turbinengehäuse von schnelllaufenden Strömungsmaschinen wie Gasturbinen und insbesondere Flugtriebwerken weisen herkömmlicherweise eine große Wandstärke auf, um eine nach einem Schaufelverlust oder einem Schaufelfragmentenverlust die Schaufel bzw. das Schaufelfragment im Inneren der Turbine zu halten. Um eine Schwächung der Turbinengehäuse zu vermeiden bzw. um eine sogenannte "Containment-Fähigkeit" des Turbinengehäuses zu erreichen, werden daher gewöhnlich Löcher bzw. Öffnungen in den Turbinengehäusen im Laufschaufelbereich vermieden. Sind jedoch beispielsweise Vorrichtungen zur Spalthaltung bzw. zur Spaltmessung eines Radialspaltes zwischen einer Laufschaufelreihe und einem die Laufschaufel umgebenden Gehäuseabschnitt vorgesehen, so lassen sich Öffnungen zur Positionierung von entsprechend Elementen wie Sensoren, Sonden und dergleichen nicht vermeiden. Beim Aufprall auf ein derartig steifes Element wird die kinetische Energie der Schaufel bzw. des Schaufelfragments vollständig an das Element übertragen, das wiederrum die Energie an seine gehäuseseitige Befestigung abgibt. Die hohe Energiedichte führt jedoch zu einem unkontrollierten Versagen der Elementenbefestigung und somit zu einem Lösen des Elements von dem Gehäuseabschnitt, was zu einem Verlust der "Containment-Fähigkeit" führt.

In der US 5,203,673 A ist eine Vorrichtung zur Spalthaltung eines Radialspaltes zwischen einer Rotorstufe einer Strömungsmaschine mit spitzenseitig konisch auslaufenden Laufschaufeln einer Laufschaufelreihe der Rotorstufe und einem die Laufschaufelreihe umgebenden konischen Gehäuseabschnitt gezeigt. Der Gehäuseabschnitt ist axial verschiebbar, sodass der Radialspalt aufgrund der konischen Ausbildung durch eine axialen Verschiebung vergrößert oder verkleinert werden kann. Zur Erfassung des Radialspaltes und zur Ansteuerung eines Stellantriebs ist in dem Gehäuseabschnitt zumindest ein Sensor vorgesehen, der in einer radialen Öffnung fest eingesetzt ist. Spaltseitig schließt zumindest der eine Sensor fluchtend mit dem Gehäuseabschnitt ab.

Aus der EP 1 754 861 A2 ist eine Vorrichtung zum Erfassen eines Radialspaltes zwischen einer Laufschaufelreihe einer Rotorstufe und einem die Laufschaufelreihe umgebenden Gehäuseabschnitt bekannt. Die Vorrichtung weist zumindest einen Sensor auf, der in einer gehäuseseitigen Öffnung eingesetzt und spaltseitig gegenüber dem Gehäuseabschnitt in der Öffnung zurückgesetzt ist. Der Sensor ist in einem Einsatz fixiert, der mittel- oder unmittelbar mit dem Gehäueabschnitt verschraubt ist.

Aus der US 2010/0313404 A1 ist ebenfalls eine Vorrichtung zur Spalthaltung eines Radialspaltes zwischen einer Laufschaufelreihe einer Rotorstufe und einem die Laufschaufelreihe umgebenden Gehäuseabschnitt bekannt. Die Vorrichtung hat einen druckbasierenden Stellantrieb, mittels dem der Gehäuseabschnitt radial nach innen und außen gefahren werden kann.

In der EP 1 073 828 A1 ist eine Vorrichtung zur Absorption von Einschlagenergie einer Laufschaufel bzw. eines Laufschaufelfragmentes einer Strömungsmaschine gezeigt. Die Vorrichtung weist ein die Laufschaufelreihe umgebendes Ringsystem aus einem starren äußeren Ring und einem plastisch verformbaren inneren Ring auf. Zwischen den Ringen ist ein Verformungsblech angeordnet. Beim Einschlag verformt sich der innere Ring, der seine Verformung zumindest teilweise an das Verformungsblech abgibt. Der starre äußere Ring hält den inneren Ring und das Verformungsblech dabei in Position.

Der Vollständigkeit halber sei zudem auch noch auf die Druckschriften EP 2 495 400 A2, EP 0 927 815 A2 und US 4 324 144 A hingewiesen.

Aufgabe der Erfindung ist es, eine Vorrichtung und ein Verfahren zu schaffen, mittels der bzw. mittels dem eine Containment- Fähigkeit eines Gehäuses einer Strömungsmaschine bei einem Aufprall zumindest eines Schaufelfragments auf ein in einem gegenüber einer Laufschaufelreihe angeordneten gehäuseseitigen Element erhalten bleibt. Zudem ist es die Aufgabe der Erfindung eine Strömungsmaschine mit einer hohen Containment- Fähigkeit zu schaffen.

Diese Aufgabe wird gelöst, durch eine Vorrichtung mit den Merkmalen des Patentanspruchs 1, durch eine Strömungsmaschine mit den Merkmalen des Patentanspruchs 4, sowie durch ein Verfahren mit den Merkmalen des Patentanspruchs 10.

Eine erfindungsgemäße Vorrichtung zum Erhalt einer Containment-Fähigkeit umfasst eine Vorrichtung zur Absorption einer auf ein Element wirkenden Einschlagenergie zumindest eines Schaufelfragments, wobei das Element in eine Öffnung einer Strömungsmaschine eingesetzt ist, die einen Gehäuseabschnitt im Bereich einer Laufschaufelreihe radial durchsetzt, hat eine Halterung zum Halten des Elements in einer Soll-Position, die ab einer voreingestellten Maximalbelastung das Element freigibt, und einen rückwärtigen Käfig zum Sichern des Elements bei einer radial nach außen gerichteten Verschiebung.

Die erfindungsgemäße Vorrichtung ermöglicht einen Abbau der Einschlagenergie im Bereich einer Öffnung und somit im Containment kritischen Gehäusebereich. Dadurch, dass das Element in einem Käfig in Radialrichtung beweglich eingebaut ist, wird in Kombination mit der ab einer Maximalbelastung sich öffnenden Halterung ein Energieeintrag auf das Element reduziert. Der Käfig sichert dabei das Element an dem bzw. im Bereich des Gehäuseabschnitts, so dass ein Lösen des Elements vom Gehäuseabschnitt grundsätzlich verhindert wird.

Die Maximalbelastung der Halterung lässt sich genau einstellen bzw. vorgegeben, da die Halterung erfindungsgemäß zumindest eine Soll-Bruchstelle aufweist.

Bevorzugterweise begrenzt der Käfig einen zur Gehäuseumgebung bzw. Außenumgebung abgeschlossenen Verschieberaum. Hierdurch wird verhindert, dass im Falle eines Einschlags ein Teilstrom einer die Strömungsmaschine durchströmenden Primärströmung durch die Öffnung in die Außenumgebung austritt. Zudem wird verhindert, dass Schaufelfragmente oder Elementenfragmente durch die Öffnung in die Außenumgebung austreten.

Zur Vorgabe einer maximalen Verschiebestrecke hat der Käfig eine rückwärtige Begrenzung zum Anschlag des Elements, wodurch die auf das Element wirkende Energie weiter abgebaut werden kann.

Eine erfindungsgemäße Strömungsmaschine hat zumindest eine erfindungsgemäße Vorrichtung und zeichnet sich hierdurch durch eine hohe Containment-Fähigkeit aus. Bevorzugterweise ist die Strömungsmaschine eine Gasturbine und insbesondere ein Flugtriebwerk.

Wenn das Element die Öffnung mit einem Abschnitt durchdringt und somit mit einem Abschnitt radial innen über die Öffnung hervorsteht, ist es vorteilhaft, wenn das Element in dem Käfig um eine radiale Strecke verschiebbar ist, die größer als ein radial innerer Überstand des Elements aus der Öffnung ist. Durch diese Maßnahme wird gewährleistet, dass das Element beim Einschlag vollständig in die Öffnung getrieben bzw. in diese eintauchen kann.

Um das Element nach dem Einschlag in der Öffnung zu halten, ist es verteilhaft wenn das Element in seiner Soll-Position mit einem Abschnitt in der Öffnung aufgenommen ist, dessen Erstreckung in axialer Richtung des Elements größer als die Verschiebestrecke ist. Durch das Halten des Elements mit einem Abschnitt in der Öffnung erfolgt eine Abdichtung des Verschieberaums, wodurch ein Eindringen eines Teilstroms der Primärströmung auch nach dem Einschlag verhindert wird. Bei einem alternativen Ausführungsbeispiel ist die axiale Erstreckung des in der Öffnung aufgenommenen Abschnitts kleiner als die Verschiebestrecke oder gleich der Verschiebestrecke.

Bevorzugterweise ist der Käfig mit einer Umfangswandung seitlich von dem Element beabstandet. Hierdurch wird ein Verkanten des Elements in dem Käfig beim Verschieben verhindert und somit beispielsweise in dem Fall, in dem das Element mit einem Abschnitt über die Öffnung radial innen hervorsteht, ein vollständiges Zurückschieben des Elements in die Öffnung gewährleistet.

Die Montage, Demontage und Wartung des Elements und seiner Halterung lässt sich vereinfachen, wenn der Käfig mittels eines Befestigungsabschnitts lösbar an einem die Öffnung rückwärtig umgebenden Stützabschnitt befestigt ist.

Die Soll-Position des Elements lässt sich genau vorgegeben, wenn das Element einen Flansch zur Anlage an dem Stützabschnitt in axialer Richtung des Elements hat. Bevorzugterweise fixiert die Halterung das Element an dem Stützabschnitt. Insbesondere wird das Element durch die Halterung radial gegen den Stützabschnitt gedrückt. Eine derartige Halterung lässt sich technisch einfach ausführen. Selbstverständlich sind auch andere Halterungen vorstellbar, wie zum Beispiel Sicherungsringe, die in Umfangsnuten des Elements und des Stützabschnitts eingesetzt sind und beim Überschreiten der Maximalbelastung das Element freigeben

Bei einem erfindungsgemäßen. Verfahren gemäß Anspruch 10 wird beim Einschlag des zumindest einen Schaufelfragments ein erster Teilenergiebetrag von dem Element absorbiert und beim Überschreiten eines voreingestellten Maximalbelastung ein zweiter Teilenergieteilbetrag durch eine radiale Bewegung des Elements nach außen und/oder durch Auflaufen auf eine rückwärtige Begrenzung des Käfigs absorbiert.

Das erfindungsgemäße Verfahren gewährleistet bei einem Schaufelverlust bzw. einem Schaufelfragmentenverlust den Erhalt der Containment-Fähigkeit des Gehäuseabschnitts und somit der Strömungsmaschine. Ein Restenergiebetrag wird durch einen Einschlag des zumindest eine Schaufelfragments auf einen Bereich des Gehäuseabschnitts absorbiert. Die Höhe des Energieeintrags in das Element hängt unter anderem vom Gewichtsverhältnis zwischen dem zumindest einem Schaufelfragment und dem Element ab. Je leichter das Element im Vergleich zur Masse des zumindest einen Schaufelfragments ist, desto geringer ist die in das Element eingebrachte Energiemenge. Die eingebrachte Energiemenge verringert sich bei der Berücksichtigung von Reibeinflüssen oder beim Ansatz eines Stoßes mit plastifizierendem Anteil. Ein ideal-elastischer Stoß stellt den konservativsten Fall dar. Beim Unterschreiten einer bestimmten, in das Element eingebrachten Energiemenge bzw. beim Unterschreiten der Maximalbelastung der Halterung, die durch die Massenverhältnisse der Stoßparameter eingestellt werden kann, führt der Einschlag nicht mehr zur Zerstörung der Halterung.

Sonstige vorteilhafte Ausführungsbeispiele der Erfindung sind Gegenstand weiterer Unteransprüche.

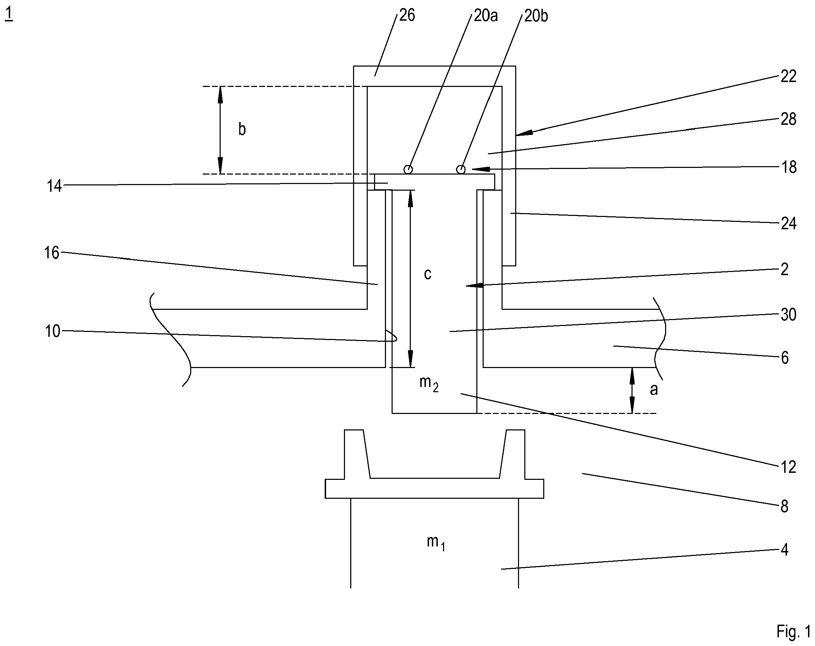

Im Folgenden werden bevorzugte Ausführungsbeispiele der Erfindung anhand stark vereinfachter schematischer Darstellungen näher erläutert. Die einzige Figur 1 zeigt ein Ausführungsbeispiel einer erfindungsgemäßen Vorrichtung im Längsschnitt.

Bei der folgenden Beschreibung einer beispielhaften erfindungsgemäßen Vorrichtung 1 bezieht sich die Richtungsangabe "radial" auf eine Maschinenlängsachse bzw. Rotorachse einer die Vorrichtung 1 aufnehmenden Strömungsmaschine. Ein im Folgenden noch näher beschriebenes Element 2 der Vorrichtung 1 hat eine Längsachse, die radial bzw. orthogonal zur Maschinenlängsachse verläuft.

In der einzigen Figur 1 ist eine erfindungsgemäße Vorrichtung 1 zur Absorption einer auf ein Element 2 wirkenden Einschlagenergie eines Schaufelfragments oder einer Schaufel einer Laufschaufelreihe 4 einer Strömungsmaschine gezeigt. Das steife Element 2 ist ein Sensor oder eine Sonde zur Spaltmessung eines Spaltes zwischen der Laufschaufelreihe 4 und einem die Laufschaufelreihe umgebenden Gehäuseabschnitt 6, der einen Strömungskanal 8 einer Primärströmung im Bereich der Laufschaufelreihe 4 radial begrenzt. Bevorzugterweise sind eine Vielzahl von derartigen Vorrichtung 1 vorgesehen, die in Umfamgsrichtung der Strömungsmaschine gleichmäßig voneinander beabstandet sind. Die Strömungsmaschine ist bevorzugterweise eine Gasturbine und insbesondere ein Flugtriebwerk. Vorzugweise ist die Vorrichtung 1 turbinenseitig in der Strömungsmaschine angeordnet.

Das Element 2 ist in eine Öffnung 10 eingesetzt, die den Gehäuseabschnitt radial durchsetzt. Es durchsetzt die Öffnung 10 und ragt mit einem Abschnitt 12 um einen Überhang bzw. einer Eintauchtiefe a in den Strömungskanal 8 hinein. Rückwärtig liegt das Element 2 mit einem Flansch 14 axial in Richtung seiner Längsachse an einem die Öffnung 10 umgebenden Stützkragens bzw. Stützabschnitt 16 auf. Um einen Austritt eines Teilstroms der Primärströmung aus dem Strömungskanal 8 durch die Öffnung 10 entlang des Elements 2 zu verhindern, ist das Element 2 entgegen der Darstellung dichtend, beispielsweise unter Presspassung, in der Öffnung 10 aufgenommen.

Zur Fixierung des Elements 2 in seiner Soll-Position an dem Stützkragen 16 weist die Vorrichtung 1 eine Halterung 18 auf. Die Halterung 18 hat in dem hier gezeigten Ausführungsbeispiel zwei sich endseitig über das Element 2 erstreckende Halteabschnitte 20a, 20b, mittels denen der Flansch 14 gegen den Stützkragen 16 gerückt wird. Die Halterung 18 ist derart dimensioniert, dass sie sich beim Überschreiten einer auf das Element 2 wirkenden Maximalbelastung in Folge eines Schaufelfragmenten- oder Schaufeleinschlags öffnet, beispielsweise durch Abscherung, und somit das Element 2 für eine radiale Verschiebung nach außen freigibt. Zur präzisen Einstellung der Maximalbelastung hat die Halterung zumindest eine Soll-Bruchstelle. Die Halterung 18 sichert somit bis zu einer definierten Maximalbelastung das Element 2 an dem Stützabschnitt 16.

Zudem hat die Vorrichtung 1 einen rückwärtigen Käfig 22. Der Käfig 22 ist becherförmig mit einer bevorzugterweise zylindrischen Umfangswandung 24 und einer entsprechend runden Bodenwandung 26 ausgebildet. Der Käfig 22 definiert einen zur Außenumgebung geschlossenen Verschieberaum 28 für das Element 2 nach dem Öffnen der Halterung 18 und verhindert so einen Verlust des Elements 2. Bevorzugterweise ist das Element 2 mit seinem Flansch 14 von der Umfangswandung 24 beabstandet. Die Führung des Elements 2 bei einer Verschiebung erfolgt somit bei diesem Ausführungsbeispiel vorzugsweise über die Öffnung 10 bzw. den Stützkragen 16 der Öffnung 10.

Der Käfig 22 umgreift den Stützkragen 16 und ist an diesem lösbar befestigt, beispielsweise mittels einer Schraubverbindung zwischen dem Stützkragen 16 und seiner Umfangswandung 24, wobei der Stützkragen 16 mit einem Außengewinde und die Umfangswandung 24 mit einem korrespondierenden Innengewinde versehen ist. Eine radiale Verschiebestrecke b für das Element 2 wird durch den Abstand zwischen dem Flansch 14 und der Bodenwandung 26 definiert. Die Bodenwandung 26 wirkt nach dem Überbrücken der Verschiebestrecke b als Verschiebebegrenzung für das Element 2.

Um wie bei diesem Ausführungsbeispiel eine vollständige Aufnahme des Elements 2 bei einem Einschlag in der Öffnung 2 zu ermöglichen, ist die Verschiebestrecke b größer als die Eintauchtiefe a des Elements 2 in den Strömungskanal 8, so dass gilt: a < b, und bevorzugterweise a << b. Um ein Verlassen des Elements 2 der Öffnung 10 nach einem Einschlag zu verhindern, ist das Element 2 in seiner Soll-Position mit einem Abschnitt 30 in der Öffnung 10 aufgenommen, dessen Erstreckung c in Richtung seiner Längsachse bzw. in axialer Richtung des Elements 2 größer als die Verschiebestrecke b ist, so dass gilt c > b. Die Erstreckung c ist dabei gleich einer Erstreckung der Öffnung 10 in radialer Richtung. Dadurch, dass das Element 2 nach dem Einschlag und der Verschiebung mit einem Abschnitt in der Öffnung 10 verbleibt, dichtet dieses auch nach dem Einschlag den Strömungskanal 8 in Richtung des Verschieberaums 28 ab. Zudem gelten die Massenbeziehungen m₂ << m₁, wobei m₂ die Masse des Elements 2 und m₁ die Masse des einschlagenden Schaufelfragments bzw. der einschlagenden Schaufel ist.

Im Folgenden wird ein bevorzugtes erfindungsgemäßes Verfahren zur Absorption einer auf das Element 2 wirkenden Einschlagenergie zumindest eines Schaufelfragments beschrieben. Das Element 2 ist in die Öffnung 10 eingesetzt und befindet sich in seiner Soll-Position, in der es mit seinem Flansch 14 an dem Stützkragen 16 anliegt und mit einem Abschnitt 12 um die Eintauchtiefe a in den Strömungskanal 8 hineinragt. Das Element 2 ist mittels der Halterung 18 in seiner Soll-Position gesichert, die rückwärtig an dem Element 2 angreift und dieses mit seinem Flansch 14 gegen den Stützkragen 16 drückt. Der Käfig 22 ist auf den Stützkragen geschraubt und definiert somit die Verschiebestrecke b.

Beim Einschlag, beispielsweise einer Laufschaufel auf das Element 2, wird dieses je nach seiner Steifigkeit plastisch verformt und absorbiert somit einen ersten Teilenergiebetrag der Einschlagenergie. Beim Überschreiten einer voreingestellten Maximalbelastung öffnet die Halterung 12 und gibt das Element 2 frei. Das Element 2 führt eine radiale Verschiebung nach außen aus und läuft je nach einem verbleibenden zweiten Teilenergiebetrag nach dem Passieren der Verschiebestrecke b auf die Bodenwandung 26 des Käfigs 22 auf, wodurch der zweite Teilenergiebetrag absorbiert wird. Das Element 2 ist nun vollständig in der Öffnung 10 eingeschoben und aufgrund des Käfigs 22 an dem Gehäuseabschnitt 6 gegen Verlust gesichert. Ein Restenergiebetrag der Einschlagenergie wird von einem Bereich des Gehäuseabschnitts 6 aufgenommen, gegen den die Laufschaufel neben dem Aufprall auf das Element 2 abschnittsweise geschleudert wird. Der Gehäuseabschnitt 6 an sich im Bereich der Öffnung 10 ist durch diesen mehrstufigen Energieabbau nicht beschädigt, sodass der Gehäuseabschnitt 6 seine Containment-Fähigkeit behält.

Ein Verlauf der Energieabsorption lässt sich insbesondere durch das Massenverhältnis m₁ zu m₂, die Steifigkeit des Elements 2, die Maximalbelastung der Halterung 18, einem Reibwert des Elements 2 in der Öffnung 2, einem Reibwert zwischen dem Element 2 und der Umfangswandung 24 des Käfigs 22 und der Verschiebestrecke b bestimmen.

Offenbart ist eine Vorrichtung zur Absorption einer auf ein Element wirkenden Einschlagenergie zumindest eines Schaufelfragments, das in eine Öffnung einer Strömungsmaschine eingesetzt ist, die einen Gehäuseabschnitt im Bereich einer Laufschaufelreihe radial durchsetzt, wobei die Vorrichtung eine Halterung zum Halten des Elements in einer Soll-Position aufweist, die ab einer voreingestellten Maximalbelastung das Element freigibt, und einen rückwärtigen Käfig zum Sichern des Elements bei einer radial nach außen gerichteten Verschiebung hat, eine Strömungsmaschine mit einer derartigen Vorrichtung sowie ein Verfahren zur mehrstufigen Energieabsorption.

### Bezugszeichenliste

- 1: Vorrichtung
- 2: Element
- 4: Laufschaufelreihe
- 6: Gehäuseabschnitt
- 8: Strömungskanal
- 10: Öffnung
- 12: Abschnitt
- 14: Flansch
- 16: Stützabschnitt /Stützkragen
- 18: Halterung
- 20a, 20b: Halteabschnitt
- 22: Käfig
- 24: Umfangswandung
- 26: Bodenwandung
- 28: Verschieberaum
- 30: Abschnitt

- a: Überhang/ Eintauchtiefe
- b: Verschiebestrecke
- c: Länge eines in der Öffnung aufgenommenen Elementenabschnitts in der Soll-Position
- m₁: einschlagende Masse
- m₂: Elementenmasse

## Patentansprüche

1. Vorrichtung zum Erhalt einer Containment-Fähigkeit eines Gehäuses einer Strömungsmaschine, umfassend:
einen Gehäuseabschnitt (6) der Strömungsmaschine mit einer Öffnung (10), die den Gehäuseabschnitt (6) im Bereich einer Laufschaufelreihe radial durchsetzt; und
ein in die Öffnung (10) eingesetztes Element (2) in Form eines Sensors oder einer Sonde;
**gekennzeichnet durch** eine Vorrichtung (1) zur Absorption einer auf das Element (2) wirkenden Einschlagenergie zumindest eines Schaufelfragments, welche eine Halterung (18) zum Halten des Elements (2) in einer Soll-Position, die zumindest eine Soll-Bruchstelle aufweist und ab einer voreingestellten Maximalbelastung das Element (2) freigibt, und einen rückwärtigen Käfig (22) zum Sichern des Elements (2) bei einer radial nach außen gerichteten Verschiebung, um ein Lösen des Elements (2) von dem Gehäuseabschnitt (6) zu verhindern, aufweist.

2. Vorrichtung nach Anspruch 1, wobei der Käfig (22) einen zur Außenumgebung geschlossenen Verschieberaum (28) begrenzt.

3. Vorrichtung nach Anspruch 1 oder 2, wobei der Käfig (22) eine rückwärtige Begrenzung (26) zum Anschlag des Elements (2) hat.

4. Strömungsmaschine mit zumindest einer Vorrichtung nach einem der vorhergehenden Ansprüche, wobei das Element (2) in dem Käfig (22) um eine radiale Strecke (b) verschiebbar ist, die größer als ein Überhang (a) des Elements (2) aus der Öffnung (10) ist.

5. Strömungsmaschine nach Anspruch 4, wobei das Element (2) in seiner Soll-Position mit einem Abschnitt (30) in der Öffnung (10) aufgenommen ist, dessen Erstreckung (c) in axialer Richtung des Elements (2) größer als die Verschiebestrecke (b) ist.

6. Strömungsmaschine nach Anspruch 4 oder 5, wobei der Käfig (22) mit seiner Umfangswandung (24) seitlich von dem Element (2) beabstandet ist.

7. Strömungsmaschine nach Anspruch 4, 5 oder 6, wobei der Käfig (22) mittels eines Befestigungsabschnitts (24) lösbar an einem die Öffnung (10) rückwärtig umgebenden Stützabschnitt (16) befestigt ist.

8. Strömungsmaschine nach Anspruch 7, wobei das Element (2) einen Flansch (14) zur Anlage an dem Stützabschnitt (16) in axialer Richtung des Elements (2) hat.

9. Strömungsmaschine nach Anspruch 7 oder 8, wobei die Halterung (18) das Element (2) an dem Stützabschnitt (16) fixiert.

10. Verfahren zum Erhalt einer Containment-Fähigkeit eines Gehäuses einer Strömungsmaschine, unter Verwendung der Vorrichtung nach einem der Ansprüche 1-4 oder der Strömungsmaschine nach einem der Ansprüche 5-9, wobei beim Einschlag des zumindest einen Schaufelfragments das Element (2) einen ersten Teilenergiebetrag absorbiert und beim Überschreiten einer voreingestellten Maximalbelastung ein zweiter Teilenergieteilbetrag durch eine radiale Bewegung des Elements (2) nach außen und/oder durch Auflaufen auf eine rückwärtige Begrenzung (26) des Käfigs (22) absorbiert wird.

## Claims

1. A device for obtaining a containment capacity of a housing of a continuous-flow machine, comprising:
a housing section (6) of the continuous-flow machine with an opening (10) that radially penetrates the housing section (6) in the area of an array of rotor blades; and
an element (2) inserted into the opening (10), which element has the form of a sensor or of a probe;
**characterised by** a device (1) for absorbing impact energy of at least one blade fragment that acts on said element (2), which blade fragment includes a holder (18) for holding the element (2) in a target position, which has at least one predetermined breaking point and releases the element (2) as from a preset maximum load, and a rearward cage (22) for securing said element (2) in the case of a radially outwardly directed displacement, in order to prevent a release of the element (2) from the housing section (6).

2. The device as claimed in claim 1, wherein the cage (22) delimits a displacement space (28) that is sealed against the outer environment.

3. The device as claimed in claim 1 or 2, wherein the cage (22) has a rearward boundary (26) for stopping the element (2).

4. A continuous-flow machine having at least one device as claimed in any one of the preceding claims, wherein said element (2) can be displaced in the cage (22) by a radial distance (b) that is greater than an overhang (a) of the element (2) from the opening (10).

5. The continuous-flow machine as claimed in claim 4, wherein the element (2) in its target position is received with a section (30) in the opening (10), the extension (c) of which in the axial direction of the element (2) is greater than the displacement distance (b).

6. The continuous-flow machine as claimed in claim 4 or 5, wherein the cage (22) is laterally spaced from the element (2) with its circumferential wall (24).

7. The continuous-flow machine as claimed in claim 4, 5 or 6, wherein the cage (22) is detachably fixed to the support section (16) rearwardly surrounding the opening (10) by means of a fixing section (24).

8. The continuous-flow machine as claimed in claim 7, wherein the element (2) has a flange (14) for abutting against the support section (16) in the axial direction of the element (2).

9. The continuous-flow machine as claimed in claim 7 or 8, wherein the holder (18) fixes the element (2) to the support section (16).

10. A method for obtaining a containment capacity of a housing of a continuous-flow machine using the device as claimed in any one of claims 1-4 or the continuous-flow machine as claimed in any one of claims 5-9, wherein in the case of an impact of the at least one blade fragment, the element (2) absorbs a first partial amount of energy and, when a preset maximum load is exceeded, a second partial amount of energy is absorbed by a radial outward movement of the element (2) and/or by running up onto a rearward boundary (26) of the cage (22).

## Revendications

1. Dispositif de conservation d'une capacité de confinement d'un carter d'une turbomachine, comprenant :
une section de carter (6) de la turbomachine, avec une ouverture (10), qui traverse radialement la section de carter (6) au niveau d'une série d'aubes mobiles ; et
un élément (2) inséré dans l'ouverture (10) sous la forme d'un capteur ou d'une sonde ;
**caractérisé par** un dispositif (1) d'absorption d'une énergie d'impact agissant sur l'élément (2) d'au moins un fragment d'aube, lequel présente une fixation (18) pour le maintien de l'élément (2) dans une position de consigne, qui présente au moins un point de rupture théorique et libère l'élément (2) à partir d'une sollicitation maximum préréglée, et une cage arrière (22) pour bloquer l'élément (2) lors d'un coulissement dirigé radialement vers l'extérieur, afin d'empêcher une désolidarisation de l'élément (2) de la section de carter (6).

2. Dispositif selon la revendication 1, dans lequel la cage (22) délimite un espace de coulissement fermé par rapport à l'environnement extérieur (28).

3. Dispositif selon la revendication 1 ou 2, dans lequel la cage (22) a une délimitation arrière (26) pour la butée de l'élément (2).

4. Turbomachine avec au moins un dispositif selon l'une quelconque des revendications précédentes, dans laquelle l'élément (2) peut coulisser dans la cage (22) d'une distance radiale (b) qui est plus grande qu'un surplomb (a) de l'élément (2) de l'ouverture (10).

5. Turbomachine selon la revendication 4, dans laquelle l'élément (2) est reçu dans sa position de consigne avec une section (30) dans l'ouverture (10), dont l'extension (c) dans la direction axiale de l'élément (2) est supérieure à la distance de coulissement (b).

6. Turbomachine selon la revendication 4 ou 5, dans laquelle la cage (22) avec sa paroi périphérique (24) est espacée latéralement de l'élément (2).

7. Turbomachine selon la revendication 4, 5 ou 6, dans laquelle la cage (22) est fixée de manière amovible à une section d'appui (16) entourant l'arrière de l'ouverture (10) au moyen d'une section de fixation (24).

8. Turbomachine selon la revendication 7, dans laquelle l'élément (2) a une bride (14) pour s'appliquer contre la section d'appui (16) dans la direction axiale de l'élément (2).

9. Turbomachine selon la revendication 7 ou 8, dans laquelle la fixation (18) fixe l'élément (2) sur la section d'appui (16).

10. Procédé de conservation d'une capacité de confinement d'un carter d'une turbomachine, utilisant le dispositif selon l'une quelconque des revendications 1-4 ou la turbomachine selon l'une quelconque des revendications 5-9, dans lequel lors de l'impact de l'au moins un fragment d'aube, l'élément (2) absorbe une première quantité d'énergie partielle et lors du dépassement d'une sollicitation maximale préréglée une deuxième quantité partielle d'énergie partielle est absorbée par un mouvement radial de l'élément (2) vers l'extérieur et/ou par glissement sur une délimitation arrière (26) de la cage (22).
